# DEMANDE DE BREVET EUROPEEN

(11) **EP 0 775 862 A1**
(43) Date de publication de la demande: **28.05.1997**
(21) Numéro de dépôt: 96402483.0
(22) Date de dépôt: 19.11.1996
(51) Int. Cl.: F16L 11/08

(54) **Tuyau léger, notamment tuyau d'arrosage**

(30) Priorité: 27.11.1995 FR 9514014
(71) Demandeur: Tricoflex S.A., 92000 Nanterre (FR)
(72) Inventeur: Barbat, Philippe, 51340 Heiltz le Maurupt (FR); Couteau, Jacques, 51300 Vitry-le-Francois (FR)
(74) Mandataire: Robert, Jean-Pierre

(57) **Abrégé**

Le tuyau comporte une âme interne revêtue extérieurement d'une armature filaire (2) de renforcement et autour de l'âme, une couche (3) en matériau alvéolaire de faible densité pourvue d'un revêtement extérieur (4) en matériau non alvéolaire lisse et souple.

## Description

La présente invention concerne un tuyau léger, notamment un tuyau d'arrosage.

Il existe des tuyaux dont la paroi est formée d'une ou plusieurs couches de mousse plastifiée et comprenant éventuellement, une armature sur ou à l'intérieur de ces couches. Outre le gain de poids que de telles structures permettent d'obtenir, elles permettent en général une plus grande flexibilité du tuyau et conservent une résistance importante à l'éclatement.

L'un de leurs inconvénients réside cependant dans la difficulté à équiper de tels tuyaux d'organes de raccordement et notamment d'organes connus et fixés par insertion en force à l'intérieur du tuyau. Ces organes ou embouts possèdent des reliefs extérieurs qui mordent la paroi intérieure du tuyau notamment sous l'effet conjugué de brides ou colliers extérieurs de compression.

Par la présente invention, on entend remédier à cet inconvénient en proposant une structure de tuyau dont la paroi de faible densité conserve tous les avantages des tuyaux classiques.

A cet effet, l'invention concerne un tuyau comportant une âme interne revêtue extérieurement d'une armature filaire de renforcement et qui comporte autour de l'âme une couche en matériau alvéolaire de faible densité pourvue d'un revêtement extérieur non alvéolaire lisse.

Grâce à cette structure, il est possible d'obtenir un tube dont la paroi est d'une densité faible. Elle permet également de mettre en place des raccords classiques par exemple des embouts possédant des reliefs en dent de sapin qui sont insérés dans l'âme intérieure du tuyau et qui sont cerclés par l'extérieur du tuyau au moyen de brides vissées connues en elles mêmes. L'âme est renforcée par une structure filaire qui peut être un guipage, un tricotage, un tressage, qui présente une excellente tenue à l'insertion d'un tel raccord du fait de sa faible capacité à être dilatée circonférentiellement. Cette armature est un gage de l'étanchéité de l'emmanchement.

Dans un premier mode de réalisation, l'âme interne est monocouche, formée donc d'un tube par exemple en PVC non alvéolé souple.

Dans une seconde réalisation de l'invention, l'âme interne est composite et comporte une première couche interne souple et lisse et une seconde couche alvéolaire sur laquelle est disposée l'armature.

Dans une variante de cette réalisation, l'âme comporte, par dessus la seconde couche alvéolaire, une troisième couche souple et lisse sur laquelle est disposée l'armature.

De manière préférée, au moins les couches non alvéolaires sont en polychlorure de vinyle (PVC).

Les couches alvéolaires peuvent également être en mousse de polychlorure de vinyle, celui-ci pouvant être réticulé chimiquement et pour cela comporter des organosilanes.

On peut également utiliser des polyoléfines par exemple des EVA (ETHYLENE-VINYLE-ACETATE). On peut également utiliser un nitril PVC vulcanisé c'est-à-dire un élastomère comportant du PVC en parts minoritaires.

Les couches alvéolaires auront de préférence une densité de l'ordre de 0,8. Toutefois, pour disposer d'une âme encore plus résistante, la couche alvéolaire de l'âme, si elle est composite, peut être d'une densité de l'ordre de 1. On règle les différentes valeurs de densité en ajustant la quantité d'adjuvant moussant introduite dans le PVC avant la fabrication du tuyau.

D'autres caractéristiques et avantages de l'invention ressortiront de la description donnée ci-après de deux modes de réalisation.

Il sera fait référence aux dessins annexés parmi lesquels :
- la figure 1 est une vue en coupe d'un premier mode de réalisation dans lequel l'âme du tuyau est constituée par un tube monocouche ;
- la figure 2 est une vue en coupe transversale d'un second mode de réalisation de l'invention dans lequel l'âme du tuyau est composite.

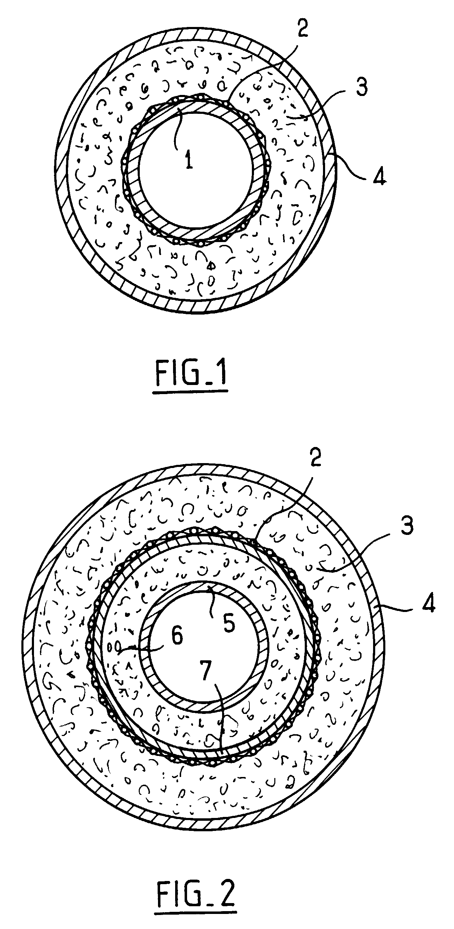

Dans la figure 1, l'âme du tuyau est constituée par un tube en polychlorure de vinyle (PVC) 1 revêtu d'une armature 2 constituée par une texture filaire soit tricotée, soit guipée soit tressée.. . A l'extérieur de cette âme, le tuyau comporte une couche 3 en matériau alvéolaire constituée par exemple d'un PVC sous forme de mousse. Il comporte enfin une dernière couche 4 extérieure constituée par un PVC non alvéolé présentant une surface lisse.

A titre d'exemple, on donnera les dimensions suivantes : diamètre extérieur du tuyau 20,7 mm, diamètre intérieur du tuyau 14,5 mm, épaisseur de la paroi 3,10 mm se répartissant comme suit :
- âme en PVC de 1,45 mm d'épaisseur, armature d'épaisseur négligeable (en générale incrustée dans l'âme),
- couche 3 alvéolaire d'épaisseur 1,25 mm en mousse de PVC de densité 0,8.
- couche 4 extérieure en PVC souple d'épaisseur 0,4 mm.

Dans cet exemple, on obtient un tuyau dont le poids est de l'ordre de 195 grammes par mètre.

Pour diminuer le poids de ce tuyau, on peut remplacer l'âme monocouche par une âme composite comprenant une première couche relativement fine de PVC lisse formant revêtement interne d'une seconde couche en PVC peu expansée (de densité égale à 1) et d'épaisseur de l'ordre de 1 mm, toutes les autres couches étant semblables à celles décrites ci-dessus. On obtient alors un tuyau dont la masse est de l'ordre de 170 grammes au mètre.

Dans le cas de la variante représentée à la figure 2, l'âme du tuyau est également composite et comporte un tube intérieur 5 en matière non alvéolée, une couche 6 en matière alvéolaire, c'est-à-dire par exemple en polychlorure de vinyle expansé et une couche externe 7 en matière non alvéolée supportant l'armature 2. Cette couche externe 7 en matière pleine constitue une barrière s'opposant à la tendance de la couche alvéolaire intérieure à traverser l'armature de renforcement lorsque le tuyau est sous pression. A l'extérieur de cette âme, le tuyau a la même composition que le tuyau selon la figure 1, c'est-à-dire une couche en matériau alvéolaire 3 et une couche de revêtement en matériau non alvéolé 4.

On a réalisé des essais et pour un tube de diamètre intérieur de 14,5 mm de diamètre extérieur de 20,3 mm, donc d'épaisseur de 2,9 mm, les dimensions des différentes couches sont les suivantes :
- couche 5 : 0,3 mm (PVC souple),
- couche 6 : 1 mm (PVC expansé de densité 1)
- couche 7 : épaisseur 0,3 mm (PVC souple)
- armature en fils tricotés de 1670 decitex et de résistance individuelle égale à 11,4 daN.
- couche 3 : épaisseur 1 mm (PVC expansé de densité 0,85),
- couche 4 : épaisseur 0,3 mm (PVC lisse).

La masse par mètre d'un tel tuyau est de 170 grammes.

Les matériaux pouvant être utilisés pour réaliser les structures de tuyau selon l'invention sont présents sur le marché. A titre d'exemple on mentionnera un PVC réticulé chimiquement, connu sous le nom commercial NORVINEX, un élastomère thermoplastique expansé connu sous le nom de VAYCRON, des EVA commercialisés sous les noms EVATANE, GREENFLEX, ESCORENE, des élastomères à base polyoléfine tels que ENGAGE ou ADFLEX et des caoutchoucs nitrile NBR commercialisés sous PERBANAN N ou KRYNAC.

Les adjuvants de moussage ont pour nom commercial AZOBUL, POROFOR, HYDROCEROL.

Les avantages complémentaires du tuyau selon l'invention résident dans un toucher très agréable et une résistance remarquable au pincement (croquage).

## Revendications

1. Tuyau comportant une âme interne revêtue extérieurement d'une armature filaire de renforcement, caractérisé en ce qu'il comporte autour de l'âme une couche (3) en matériau alvéolaire de faible densité pourvue d'un revêtement extérieur (4) lisse et souple.

2. Tuyau selon la revendication 1, caractérisé en ce que l'âme interne est composite et comporte une première couche interne souple et lisse et une seconde couche alvéolaire sur laquelle est disposée l'armature.

3. Tuyau selon la revendication 1, caractérisé en ce que l'âme comporte une première couche interne (5) souple et lisse, une seconde couche alvéolaire (6) et une troisième couche (7) souple et lisse sur laquelle est disposée l'armature (2).

4. Tuyau selon l'une des revendications précédentes, caractérisé en ce que les couches non alvéolaires sont en polychlorure de vinyle.

5. Tuyau selon l'une des revendications précédentes, caractérisé en ce que les couches alvéolaires ont une densité de l'ordre de 0,8.

6. Tuyau selon l'une des revendications 2 à 4, caractérisé en ce que la couche alvéolaire de l'âme est d'une densité de l'ordre de 1.
